# EUROPEAN PATENT APPLICATION

(11) **EP 1 801 937 A1**
(43) Date of publication of application: **27.06.2007**
(21) Application number: 05790608.3
(22) Date of filing: 06.10.2005
(51) Int. Cl.: H01R 31/06, G06F 1/18

(54) **CONNECTOR**

(30) Priority: 07.10.2004 JP 2004295172
(71) Applicant: FCI, 78000 Versailles (FR)
(72) Inventor: KAMEDA, Yasutoshi, 2920801 (JP)
(74) Representative: Cabinet Plasseraud
(86) International application number: PCT/JP2005/018543
(87) International publication number: WO 2006/038671

(57) **Abstract**

A connector for electrically connecting a primary side mating connector having contacts and a secondary mating connector having contacts. The connector has parallelly arranged flexible cables and connectors provided at both ends of the cable and individually connected to the primary and secondary mating connectors. The number of the primary side contacts is less than the number of the secondary side contacts, and at least some of the secondary side contacts are connected to one cable that is shared by a set of contacts. The primary side mating connectors are fixed on a circuit board. The secondary mating connector is assembled in an information device that is movable on a mounting surface.

## Description

### Technical Field

The present invention relates to a cable type connector and connector connection structure for interconnecting connectors on a primary device side and a secondary device side, and particularly relates to a cable-type connector for connecting a primary side comprising a control-side electronic circuit board and a secondary side comprising an information device in a personal computer.

### Background Art

Generally, computer devices such as personal computers and laptop computers comprise an electronic circuit board on which are mounted devices such as memory or a microprocessor for performing computations, and an externally connectable information device separate from the electronic circuit board. Normally, when electrically connecting the electronic circuit board side and the information device side, an information device side connector having an array of contacts connected to given cables or wires for operating the information device is mounted on a portion of the casing on the information device side, and an electronic circuit board side connector having an array of contacts corresponding to the information device side connector with leg portions or the like anchored by means of soldering or the like is mounted at the edge of the electronic circuit board, and the information device side connector is directly inserted into the electronic circuit board side connector to make the connector connection.

With this connector connection, the insertion force for connecting the connectors depends on the frictional force of each contact and the number of contacts, and there is a one-to-one correspondence between the contacts of the information device side connector and the contacts of the electronic circuit board side connector, so an increase in the number of contacts may be accompanied by an increased load on the anchoring portions of the electronic circuit board side connector at the time of insertion, thus making the connector anchoring portions susceptible to detachment or breakage, and also requiring the connector to be made larger. Additionally, another method is to use a cable type connector to indirectly electrically connect the information device side connector and the electronic circuit board side connector in an immobile state.

Patent Document 1: JP H6-13143 A
Patent Document 2: JP H7-235356 A

### DISCLOSURE OF THE INVENTION

### Problems to be Solved by the Invention

However, when generally considering methods of indirect connection using cable-type connectors as compared with methods for connecting information device side connectors and electronic circuit board side connectors by direct insertion, a step of providing separate anchoring means for anchoring the information device is necessary on the information device side. Additionally, on the electronic circuit board side, the number of contacts on the information device side and the electronic circuit board side connectors is the same, so a cable-type connector for connecting these must have the same number of cables or wires as the contacts, which is undesirable in terms of wiring efficiency and production cost. Furthermore, with regard to the insertion force of cable-type connectors to electronic circuit board side connectors, the number of contacts in the connectors is the same, so the amount of insertion force is the same as with the method of direct insertion of an information device side connector, and as described above, there is the possibility that the anchoring portion of the electronic circuit substrate side connector will become detached or damaged, and the size of the connector must be made large.

### Means for Solving the Problem

Therefore, the present applicant performed diligent research toward solving the above problems, and discloses a cable-type connector wherein the information device is not completely anchored as in conventional devices, having a freely movable structure (known as "floating" below) within a certain two-dimensional or three-dimensional partition, enabling the connectors to be connected with little insertion force at the electronic circuit board side, and being of compact size.

According to a preferred embodiment of the present invention, the cable-type connector of the present invention is a cable-type connector for electrically connecting a primary side counterpart connector having a plurality of contacts and a secondary side counterpart connector having a plurality of contacts, the connector comprising:
a plurality of flexible cables arrayed in parallel; and
connectors provided at ends of said cable, respectively connected to said primary side and secondary side counterpart connectors;
wherein
the number of contacts on the primary side connector is less than the number of contacts on the secondary side connector;
at least some of the contacts on the secondary side connector are connected to a single cable shared by a plurality as a group; and
the primary side counterpart connector is anchored to a circuit board, the secondary side counterpart connector is provided on an information device, and said information device is movable on a surface of placement.

For example, particularly in compact computer devices such as laptops, the configurations of the information device side connector and electronic circuit board side connectors must be restricted in order to make efficient use of interior space. Therefore, one might contemplate achieving an indirect electrical connection between the information device side and the electronic circuit board side using a cable-type connector having connectors terminally wired to complement the counterpart connectors on the information device side and electronic circuit board side at both ends of a deformable flexible cable which can be adapted to many connector configurations at either end.
In this case, if the connection between the information device side connector of the cable-type connector and the information device side counterpart connector is such that the information device is not anchored inside the computer device by anchoring means, such as when the information device is in a state of rest on the flat surface of the casing of the computer device, then there is no need to separately provide an anchoring portion for anchoring the information device, thus allowing efficient use of the interior space and further eliminating the load on the anchoring portion due to the insertion force of the cable-type connector as discussed in the above-described problems.
On the other hand, in the information device side connector, a plurality of contacts are shared by one end of a single cable, and the other end of said one cable is connected to a single contact in the electronic circuit board side connector. By wiring the electronic circuit board from said contact in a predetermined manner and forming a plurality of branched lines, it is possible to transmit a plurality of different signals by staggering their periods, and the connections between a plurality of contacts on the information device side and a single contact in the predetermined wiring on the electronic circuit board can be performed with a single cable. As a result, while it was conventionally necessary to connect the connectors on the information device side and the electronic circuit board side on a one-to-one basis, it is possible to connect the connectors on the respective sides with fewer contacts than the contacts on the information device side connector.
On the other hand, in the connection between the electronic circuit board side connector of the cable-type connector and the counterpart connector mounted on the electronic circuit board, the contacts arrayed on the electronic circuit board side connector of the cable-type connector can be wired with fewer contacts than the information device side connector as mentioned above. As a result, since the insertion force of a cable-type connector into a counterpart connector anchored on a electronic circuit board can be determined by the frictional force between contacts provided in the electrically contacting connectors, if the number of contacts is reduced as compared with the number of contacts necessary in conventional wiring, then the insertion force can be correspondingly reduced, while also enabling the cable to be made more compact due to the reduction in number of contacts.
As described above, the connector of the present invention allows for connector connections specific to the electronic circuit board side and the information device side.

According to a preferable embodiment of the present invention, the information device connected to the connector according to the present invention being movable on a surface of placement means being in a floating state.

For example, an information device itself having an information device side counterpart connector to be connected to a cable-type connector has a structure such as to be positioned so as to be freely movable (floating) within an arbitrary two-dimensional or three-dimensional partition inside a computer device, thereby enabling partitions to be formed using a simpler method than in the case where the information device is anchored, thus improving the degree of freedom of the information device.

According to a preferable embodiment of the present invention, the information device of the present invention is a hard disk drive device.

A typical example of such an information device is, for example, a hard disk drive device, and the connector of the present invention can actually be applied to the hard disk device inside a computer device.

According to a preferable embodiment of the present invention, the types of cables in the present invention are for signal lines and power lines.

For example, in order to drive a hard disk device, control signal lines for control by a microprocessor and power lines for electric power to be supplied to the hard disk device are necessary. In particular, control signal lines require transfer of high-speed, low-voltage signals, so special, low-impedance, high-performance cables for use with serial ATA signal format are desirable. Thus, the connectors of the present invention can be constructed from two types of cables, for signal lines and power lines.
Additionally, the connectors at the ends of the cable-type connector of the present invention have at least one control signal contact and at least one power contact terminally wired from the above two types of cables. As for the respective configurations, an information device side connector of a cable-type connector in a power cable might be electrically connected to a single cable sharing a plurality of power contacts to which the same voltage is applied, and an electronic circuit board side connector of a cable-type connector might have contacts connected in a one-to-one correspondence to each cable. Additionally, on the information device side of the cable-type connector in a control signal cable, wiring is performed with one contact per cable line, and in the electronic circuit board side connector, at least one drain line is connected to the shield covering the contacts, thus allowing for a contact configuration that reduces the number of terminals while keeping the performance constant.

According to a preferable embodiment of the present invention, the primary side connector of the present invention consists of two types of connectors of signal and power type.

In the electronic circuit board side connector, a specific, independent structure such that the number of contacts of the electronic circuit board side connector is fewer than the number of contacts of the hard disk device side connector can be employed for both the control signal cable and power cable, so that if the connectors are connected on the electronic circuit board side using the two types of connectors of a connector wired with only power lines and a connector wired with only control signal lines, then the power lines and signal lines can be separately wired on the electronic circuit board, thus improving the degree of freedom of wiring on the electronic circuit board.

Herebelow, the characteristics and structure of the present invention shall be described in further detail by explaining the present invention with reference to the attached drawings.

### BRIEF DESCRIPTION OF THE DRAWINGS

[Fig. 1] A perspective view of a connection between an electronic circuit board side and an information device using a cable-type connector according to the present invention.
[Fig. 2] An enlarged view showing the state of connection of a cable-type connector 1 according to a first embodiment of the present invention.
[Fig. 3] A wiring diagram of the connectors terminally wired to the ends of a cable-type connector 1 according to a first embodiment of the present invention, on a hard disk device side (a) and an electronic circuit board side (b).
[Fig. 4] A side view of a connection of a cable-type connector 1 according to a first embodiment of the present invention with a hard disk device side counterpart connector and an electronic circuit board side counterpart connector.
[Fig. 5] A wiring diagram of the connectors terminally wired to the ends of a cable-type connector 1 according to a second embodiment of the present invention, on a hard disk device side (a) and an electronic circuit board side (b).
[Fig. 6] A side view of a connection of a cabte-type connector 1 according to a second embodiment of the present invention with a hard disk device side counterpart connector and an electronic circuit board side counterpart connector.
[Fig. 7] A wiring diagram of the connectors terminally wired to the ends of a cable-type connector 1 according to a third embodiment of the present invention, on a hard disk device side (a) and an electronic circuit board side (b).
[Fig. 8] A side view of a connection of a cable-type connector 1 according to a third embodiment of the present invention with a hard disk device side counterpart connector and an electronic circuit board side counterpart connector.

### Explanation of Reference Numbers

- 1: cable-type connector
- 2: information device (hard disk) side connector
- 2': information device (hard disk) side counterpart connector
- 3: electronic circuit board side connector
- 3': electronic circuit board side counterpart connector
- 3a: electronic circuit board side counterpart connector
- 3b: electronic circuit board side counterpart connector
- 3b': electronic circuit board side counterpart connector
- 3c: electronic circuit board side counterpart connector
- 3c': electronic circuit board side counterpart connector
- 4: electronic circuit board
- 5: hard disk device
- 6: hard disk housing case
- 7: casing of computer device
- 8: bottom surface
- 9: guide projection
- 11: cable-type connector according to second embodiment
- 21-24: power cables
- SP1-SP11: contacts for connecting to power cables
- SS1: ground contact
- SS2: signal contact
- SS3: signal contact
- SS4: ground contact
- SS5: signal contact
- SS6: signal contact
- SS7: ground contact
- 25: sgnal cable
- 26: signal cable
- 27': signal line
- 27": signal line
- 28': signal line
- 28": signal line
- 29': drain line
- 29": drain line
- 30': drain line
- 30": drain line
- 35: shield

### BEST MODES FOR CARRYING OUT THE INVENTION

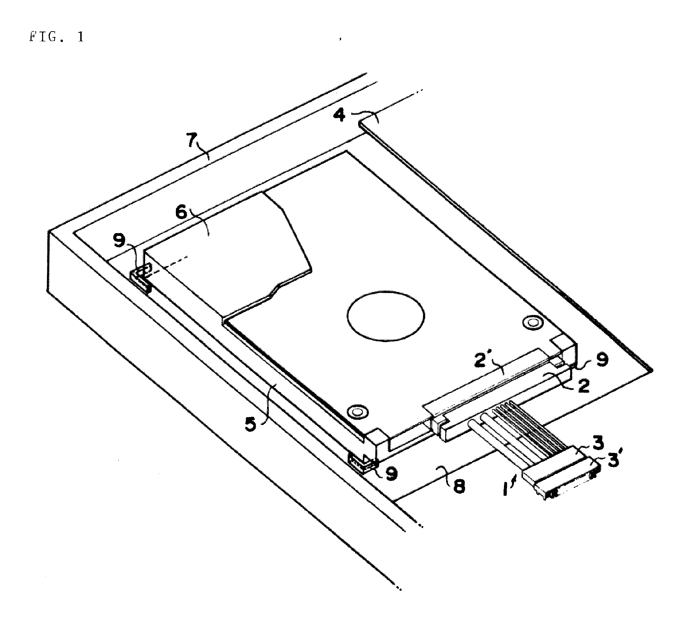

Fig. 1 shows an overall perspective view of how a cable-type connector 1 according to a first embodiment of the present invention is connected at one end to a counterpart connector 2' on a hard disk device side and at the other end to a counterpart connector 3' mounted on an electronic circuit board 4, thus configuring the electrically connected components to transmit control signals or the like from the microprocessor to the hard disk device. The hard disk device 5 has wiring with lines for power and control signals that are not shown, such as wiring in a circuit board, the lines being connected to a corresponding plurality of contacts (not shown) arrayed inside a connector (counterpart connector 2' to the hard disk side connector 2 of the cable-type connector) formed at an edge of the hard disk housing 6. Additionally, on the electronic circuit board 4 is provided a connector (counterpart connector 3' to the electronic circuit board side connector 3 of the cable-type connector) having therein an array of contacts (not shown) connected to given wiring for transmitting power and control signals to the hard disk device 5. The cable-type connector 1 uses two types of cables, for power and for control signals as indicated in the embodiment explained in detail below. After the counterpart connector 2' has been connected to the connector 2 of the cable-type connector 1, the hard disk housing 6 is placed on a surface 8 forming the bottom surface of the casing 7 of the computer device housing the electronic circuit board 4 and the hard disk device 5, and positioned within a space whose four corners are defined by L-shaped guide projections 9 protruding from said bottom surface 8 spaced from the edge portions forming the corners of the hard disk housing 6. The hard disk casing 6 is freely movable within the space. This is merely one example of a means for forming this space, and it is possible to provide other means for restricting the free movement of the hard disk by modifying the L-shaped guide projections and, for example, forming a space with a gap maintained along the edge portions of the hard disk housing case or by enclosing all four sides by positioning a cushioning buffer material.

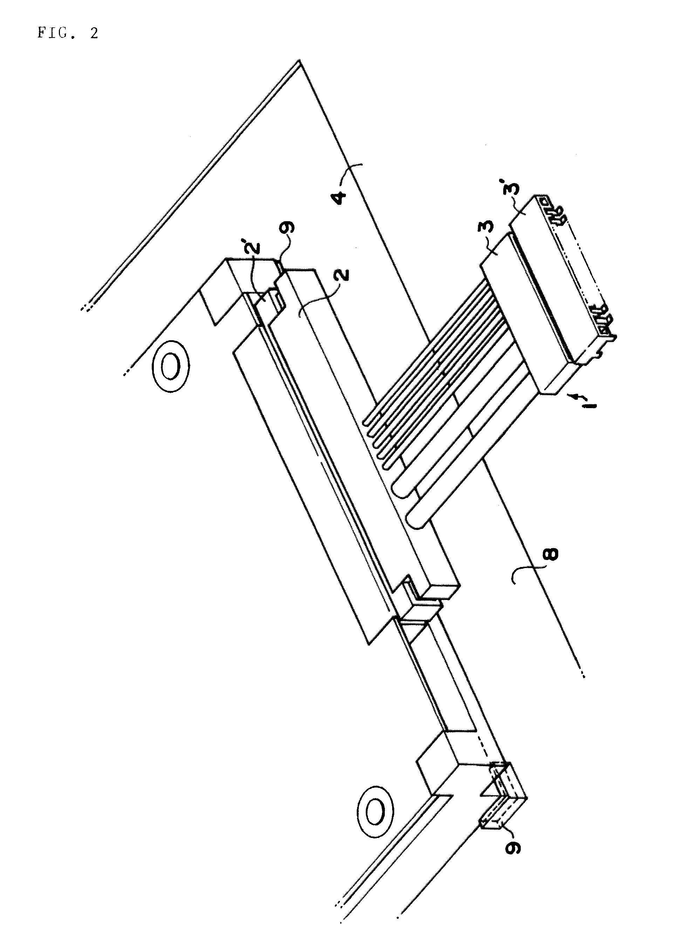

Fig. 2 is an enlarged view of the state of connection of the cable-type connector 1 of the first embodiment according to the present invention as seen in Fig. 1.

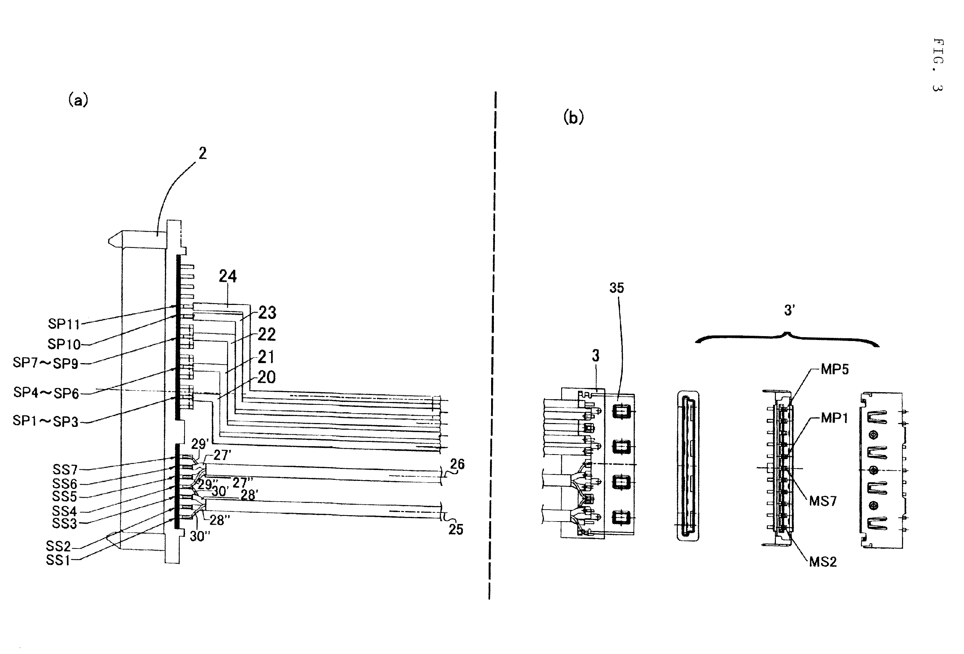

Fig. 3 shows wiring diagrams on the hard disk device side (a) and the electronic circuit board side (b) for connectors terminally wired to the ends of a cable-type connector 1 according to the first embodiment of the present invention. First, the hard disk device side connector wiring shall be explained. The reference numbers SP1-SP11 in the hard disk side connector of (a) denote power line contacts for the connector, of which SP1-SP3 are joined together by a conductive material and connected to a single power cable 20 as an electrically shared contact. SP4-SP6 and SP7-SP9 likewise form groups of three contacts that each share a single power cable 21, 22. Here, the purpose of the present invention is achieved as long as two or more contacts are shared as a single group. Additionally, SP10 and SP11 are each connected alone to a single power cable 23, 24. Next, the reference numbers SS1-SS7 on the hard-disk device side connector of (a) are control signal contacts for the connector, to which are terminally wired the pairs of signal lines 27', 27", 28', 28" and pairs of drain lines 29', 29", 30', 30" contained in the two signal cables 25, 26, as shown. Describing the respective contacts, SS1, SS4 and SS7 denote ground contacts, SS1 being connected to the drain line 30', SS4 being connected to both drains lines 29" and 30', and SS7 being connected to 29'. SS2 and SS3 indicate a pair of signal lines of positive and negative polarity such as, for example, differential transmission lines, and are connected to the signal lines 28" and 28'. SS5 and SS6 indicate a pair of signal lines such as differential transmission lines, connected to the signal lines 27" and 27'.

Secondly, the electronic circuit board side connector wiring of (b) shall be explained. The contacts of the electronic circuit board side connector 3 are terminally wired in a one-to-one correspondence with the power cables 21-24. Additionally, the pair of signal lines and pair of drain lines contained in the control cables 25, 26 will be wired roughly symmetrically to the hard disk device side at (a), but while the drain line 30" is connected to ground contacts on the hard disk device side (a), it is connected to the shield 35 on the electronic circuit board side (b), consisting of a conductive member and covering the contacts terminally wired to the cable. For this reason, it is possible to omit the contacts on the electronic circuit board side (b), thereby reducing the friction occurring when connecting the counterpart connector on the electronic circuit board side and achieving a low insertion force. As a result, the load on the anchoring portion of the counterpart connector anchored to the electronic circuit board side can be reduced, thus reducing the possibility that the counterpart connector will be detached or damaged by the insertion force. Additionally, the drain line 29' connected to SS7 on the hard disk side connector (a) is connected to the signal line contact adjacent to the power line on the electronic circuit board side (b), but the same function can be achieved by connecting it to the shield, thus further reducing the number of terminals.

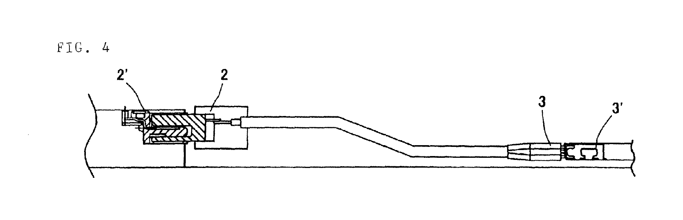

Fig. 4 is a side view wherein a hard disk device side counterpart connector 2' and an electronic circuit board side counterpart connector 3' are connected by a cable-type connector 1 according to the first embodiment of the present invention.

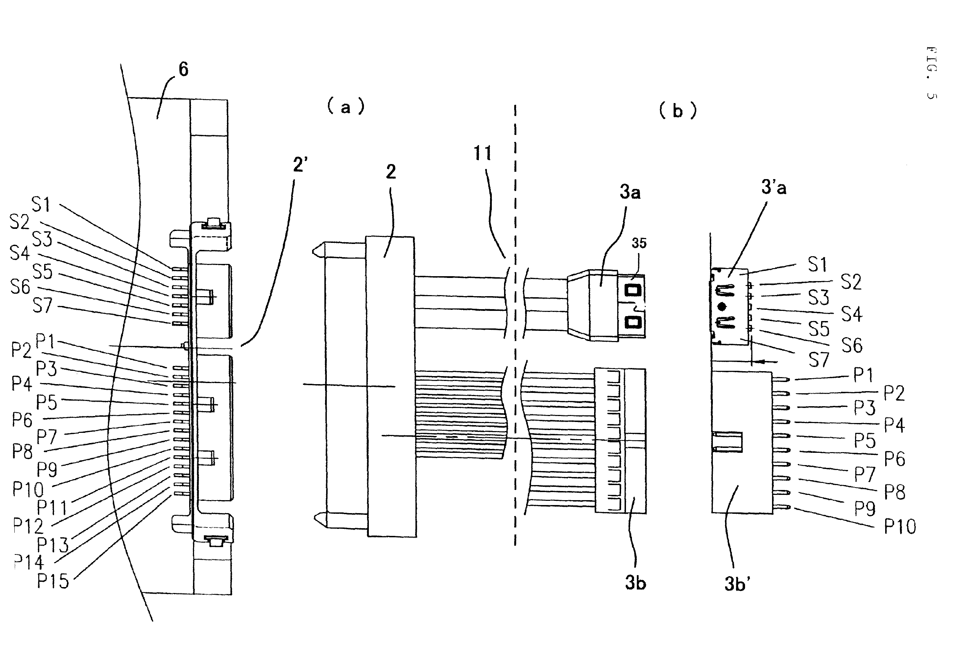

Fig. 5 shows a cable-type connector 11 according to a second embodiment of the present invention. The differences from the first embodiment of Fig. 3 are that, on the hard disk device side (a), a counterpart connector 2' is mounted on the hard disk housing 6 of the hard disk device 5, and the positional order of the power and control signal cables and the number of power cables differ, and on the electronic circuit board side (b), separate connectors 3a, 3b are formed for the wiring of the power cables and the control signal cables, and the counterpart connectors 3'a and 3'b are provided on the electronic circuit board side. By making the electronic circuit board side connectors of the cable-type connector 11 of the present invention of two separate connectors, the degree of freedom of positioning of the counterpart connectors mounted on the electronic circuit board increases.

Fig. 6 shows a side view of a connection between a counterpart connector on a hard disk device side and a counterpart connector on the electronic circuit board side using a cable connector 11 according to the second embodiment of the present invention.

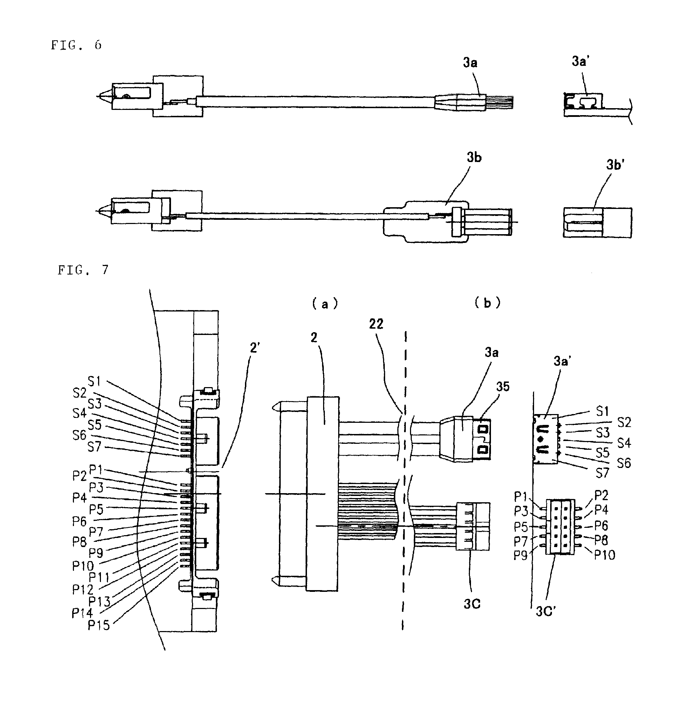

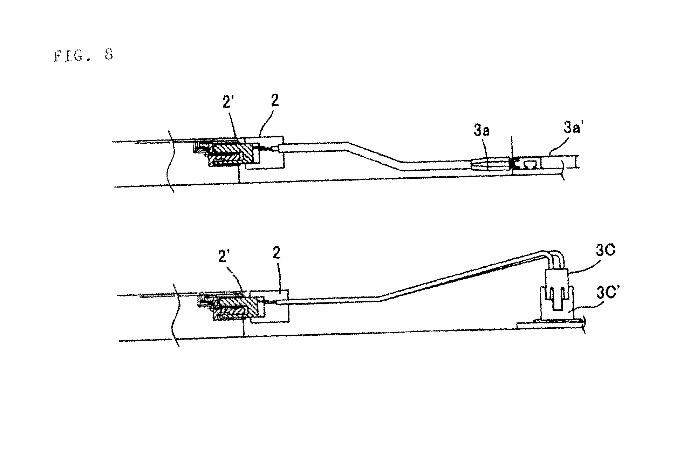

Fig. 7 shows a cable-type connector 22 according to a third embodiment of the present invention. While the connector 2 and counterpart connector 2' on the hard disk device side (a) and the connector 3a and counterpart connector 3'a on the electronic circuit board side (b) are the same as in the second embodiment, the shapes of the power line connector 3c and counterpart connector 3c' on the electronic circuit board side (b) are different. When the contacts of the connector 3c are seen from a direction parallel to the electronic circuit board, there are two symmetrical rows of five cables each for a total of ten, and the contacts are pin-shaped to form a plug-type connector. The counterpart connector 3c' is a socket-type connector, and as shown in Fig. 8, inserted and fitted from a vertical direction onto the surface of an electronic circuit board. In the case of the present embodiment, despite some additional thickness in the direction perpendicular to the surface of the electronic circuit board, the connectors can be made more compact without damaging the anchoring portion of the counterpart connector on the electronic circuit board.

Fig. 8 is a side view wherein the counterpart connector 2' on the hard disk device side and the counterpart connectors 3a', 3c' of the electronic circuit board side are connected with a cable connector 22 according to the third embodiment of the present invention.

As described above, the cable-type connector of the present invention for the purpose of electrically connecting an information device side such as a hard disk or the like and an electronic circuit board side has two types of cables for power and control signals, reducing the number of cables by sharing a plurality of contacts connected to the power lines of the information device side connector with a singe cable, and reducing the contacts on the electronic circuit board side connector by connecting at least one drain line of the control signal cables containing a pair of signal lines and a pair of drain lines to a shield. Therefore, when comparing the information device side and the electronic circuit board side, the number of both power and control signal contacts is reduced on the electronic circuit board side, thus enabling a connector connection with a low insertion force on the electronic circuit board side.

Additionally, by using a floating structure on the information device side, the load on the anchoring portion anchoring the information device when inserting the connector as in conventional devices can be reduced for connection of the information device side connector.

## Claims

1. A cable-type connector for electrically connecting a primary side counterpart connector having a plurality of contacts and a secondary side counterpart connector having a plurality of contacts, the connector comprising:
a plurality of flexible cables arrayed in parallel; and
connectors provided at ends of said cable, respectively connected to said primary side and secondary side counterpart connectors;
wherein
the number of contacts in the primary side connector is less than the number of contacts on the secondary side connector;
at least some of the contacts on the secondary side connector are connected to a single cable shared by a plurality as a group; and
the primary side counterpart connector is anchored to a circuit board, the secondary side counterpart connector is provided on an information device, and said information device is movable on a surface of placement.

2. A cable-type connector in accordance with claim 1, wherein being movable on a surface of placement means being in a floating state.

3. A cable-type connector in accordance with claim 1 or 2, wherein said information device is a hard disk drive device.

4. A cable-type connector in accordance with any one of claims 1-3, wherein the types of said cable are those for signal lines and power lines.

5. A cable-type connector in accordance with any one of claims 1-4, wherein the primary side connector consists of two types of connectors, for signals and for power.

## Amended claims

### Amended claims in accordance with Rule 86(2) EPC.

1. (amended) A cable-type connector for electrically connecting a primary side counterpart connector having a plurality of contacts and a secondary side counterpart connector having a plurality of contacts inside a computer device, the connector comprising:
a plurality of flexible cables arrayed in parallel; and
connectors provided at ends of said cable, respectively connected to said primary side and secondary side counterpart connectors;
wherein
the number of contacts in the primary side connector is less than the number of contacts on the secondary side connector;
at least some of the contacts on the secondary side connector are connected to a single cable shared by a plurality as a group; and
the primary side counterpart connector is anchored to a circuit board, the secondary side counterpart connector is provided on an information device, and said information device is movable on a surface of placement inside said computer device.

2. A cable-type connector in accordance with claim 1, wherein being movable on a surface of placement means being in a floating state.

3. A cable-type connector in accordance with claim 1 or 2, wherein said information device is a hard disk drive device.

4. A cable-type connector in accordance with any one of claims 1-3, wherein the types of said cable are those for signal lines and power lines.

5. A cable-type connector in accordance with any one of claims 1-4, wherein the primary side connector consists of two types of connectors, for signals and for power.
